# EUROPEAN PATENT APPLICATION

(11) **EP 2 051 467 A1**
(43) Date of publication of application: **22.04.2009**
(21) Application number: 07301426.8
(22) Date of filing: 03.10.2007
(51) Int. Cl.: H04L 27/26, H04L 25/02

(54) **Apparatus and method for channel estimation**

(71) Applicant: Thomson Licensing, 92100 Boulogne-Billancourt (FR)
(72) Inventor: Liu, Dun, 100876 Beijing (CN); Zou, Li, 100088 Beijing (CN)
(74) Representative: Ruellan-Lemonnier, Brigitte

(57) **Abstract**

A method and apparatus for channel estimation is described. The method (400) includes receiving (420) an OFDM signal containing pilot sub-carriers, calculating (440) a transmission channel response based on the pilot subcarriers, deriving (450) a time delay characteristic based on the transmission channel response, and selecting (470) interpolation filter coefficients in response to determining the maximum delay due to the channel response. The apparatus (200) includ es a n extraction block (220) for separating subcarriers containing reference data and for determining the effect of the transmission channel on the separated sub-carriers, an interpolation circuit (230) for outputting an estimate of the effect of the transmission channel, and a controller (250) for altering the characteristics of the interpolation circuit (230) in response to the effect of the transmission channel.

## Description

### FIELD OF THE INVENTION

The present invention relates generally to the reception and demodulation of multicarrier transmission signals and more specifically to the demodulation of an Orthogonal Frequency Division Multiplexing (OFDM) signal, such as a digital television signal, through the use of a channel estimate that is determined based on sub-carriers.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Digital television signal systems represent the new generation of television broadcasting, employing digital signal processing in signal generation, signal transmission, signal reception , and customer display. Globally, several standards for digital television signal transmission have been employed including the Advanced Televisions Systems Committee (ATSC) standard predominantly in the United States and the Digital Video Broadcast - Terrestrial (DVB-T) standard predominantly in Europe and other parts of the world. A variant of DVB-T, known as DVB-Handheld (DVB-H) is a standard for application in small handheld and mobile devices based on the DVB-T standard. Both DVB-T and DVB-H use OFDM as the modulation layer format technology.

OFDM is a robust technique for efficiently transmitting data over a channel. The technique uses a plurality of sub-carrier frequencies (sub-carriers) within a channel bandwidth to transmit data. These sub-carriers are arranged for optimal bandwidth efficiency, as compared to conventional frequency division multiplexing (FDM) which can waste portions of the channel bandwidth in order to separate and isolate the sub-carrier frequency spectra and thereby avoid inter-carrier interference (ICI). By contrast, although the frequency spectra of OFDM sub-carriers overlap significantly within the OFDM channel bandwidth, OFDM nonetheless allows resolution and recovery of the information that has been modulated onto each sub-carrier.

An OFDM transmission system, such as is used in DVB-T and DVB-H, splits a high-rate data-stream into a number of lower rate streams to be transmitted simultaneously over a number of sub-carriers. In the transmitter, the data bits are modulated on to sub-carriers using either phase shift keying (PSK) or quadrature amplitude modulation (QAM). One detection scheme for recovering the data bits is known as coherent detection. Coherent detection makes decisions about bit or symbol values based on the absolute amplitude and phase knowledge of the signal relative to a detection point. Although the receiver complexity is higher, the receiver performance is better with much lower implementation loss. As a result, high QAM constellation densities may be used and the transmission data rate may be increased. Coherent detection is more widely used in the higher data rate OFDM communication systems, such as DVB-T/H, Institute of Electrical and Electronics Engineers (IEEE) 802.11, and the Worldwide Interoperability for Microwave Access (WIMAX) standard.

One common problem for over the air broadcast systems relates to the broadcast signal passing through a transmission channel that contains a time varying channel response and multi-path signal distortions between the transmitter and receiver. As a result, the transmitted signal suffers from fading impairments, such as multi-path signal fading and doppler effects, at the receiver potentially creating a severe impact on the bit error rate performance of the received signal. Although the OFDM transmission system has some inherent immunity to the effects of the varying channel response and multi-path signal distortions, the different sub-carriers may still be subjected to differing levels of fading impairments producing unknown phase and amplitude variations and/or signal reception errors.

In order to further reduce the effects of fading impairments on the sub-carriers in an OFDM system due to these unknown phase and amplitude variations, a process of channel response estimation may be advantageously used with coherent detection type OFDM receivers to estimate the amplitude and phase distortion on each sub-carrier. The estimation process is assisted through the introduction of training signals. A broadcast system such as the DVB-T or DVB-H system includes the transmission of pilot signals, known as scatter pilots, on certain sub-carriers. The scatter pilots are spread throughout the complete set of sub-carriers. The scatter pilots represent known or expected signals for the receiver and transmission channel effects on the pilot sub-carriers in the OFDM may then be determined. Some form of interpolation of the pilot carrier channel response may be employed in order to estimate the transmission channel effects on the data sub-carriers located between the pilot sub-carriers. However, the interpolation process may involve compromises , such as between the speed of the interpolation and the ability to correct for the most extreme transmission channel multi-path effects.

For instance, one known interpolation process involves the use of a digital interpolation filter containing a fixed number of delay taps and a particular set of filter taps coefficients used for determining the interpolator output values. The cut-off or corner frequency of the interpolation filter, which determines the maximum channel time delay spread that can be processed or corrected by the filter, is a function of both the number of delay taps and the filter tap coefficients. In many instances, the corner frequency of the interpolation, and as a result the number of delay taps, is a matter of initial design choice and may potentially be much bigger or much smaller than is necessary to accommodate the actual current channel response time delay present. If the designed corner frequency is much bigger than is necessary to accommodate the actual maximum channel delay, a lot of noise unrelated to the transmitted desired may be present inside the pass-band of the filter output and greatly impact the BER performance of the receiver. If the designed corner frequency is too small, then the longest time delay path in the receiver will not be properly accounted for in the interpolation process, resulting in a poor channel estimate. Therefore, there is a need for an improved system and method for channel estimation performed by interpolation of pilot sub-carrier signals in an OFDM signal transmission system.

### SUMMARY OF THE INVENTION

The disclosed embodiments relate to a method and apparatus for channel estimation. According to certain aspects of the present embodiment, a method is disclosed that includes receiving an OFDM signal containing pilot sub-carriers, calculating a transmission channel response based on the pilot sub-carriers, deriving a time delay characteristic based on the transmission channel response, and selecting interpolation filter coefficients in response to the derived time delay characteristic.

According to aspects of another embodiment, an apparatus is disclosed for receiving a signal, including sub-carriers containing data and sub-carriers containing reference information, transmitted across a transmission channel including a pilot extraction block coupled to an input for separating the sub-carriers containing reference information and for determining the effect of the transmission channel on the sub-carriers containing reference information, an interpolation circuit coupled to the pilot extraction block for outputting an estimate of the effect of the transmission channel on the sub-carriers containing data, and a controller coupled to the pilot extraction block and interpolation circuit for altering the characteristics of the interpolation circuit in response to the the effect of the transmission channel on the sub-carriers containing reference information.

According to aspects of another embodiment, an apparatus is described including means for extracting a set of sub-carriers from the OFDM signal, means for calculating a transmission channel response based on the extracted set of sub-carriers, means for determining a time delay characteristic based on the calculated transmission channel response, and means for selecting an interpolation filter characteristic in response to determining the time delay characteristic.

### BRIEF DESCRIPTION OF THE DRAWINGS

In the drawings:
FIG. 1 is a block diagram of a receiver according to aspects of the present disclosure.
FIG. 2 is a block diagram of an embodiment of a channel estimation circuit according to aspects of the present disclosure.
FIG. 3 is a block diagram of an alternate embodiment of a channel estimation circuit according to aspects of the present disclosure.
FIG. 4 is a flow chart of an embodiment of a process for channel estimation according to aspects of the present disclosure.

The characteristics and advantages of the present invention may become more apparent from the following description, given by way of example.

### DETAILED DESCRIPTION

One or more specific embodiments of the present disclosure will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The following describes a system and circuits used for receiving signals in a broadcast signal environment such as DVB-T or DVB-H. Other systems and circuits utilized to transmit and receive other types of signals in other networks may include very similar structures. Those of ordinary skill in the art will appreciate that the embodiment of the circuits described herein is merely one potential embodiment. As such, in alternate embodiments, the components of the system may be rearranged or omitted, or additional components may be added based on particular attributes of the system. For example, with minor modifications, the circuits described may be configured for use in other wireless networks such as an Institute of Electrical and Electronics Engineers (IEEE) 802.11 wireless network.

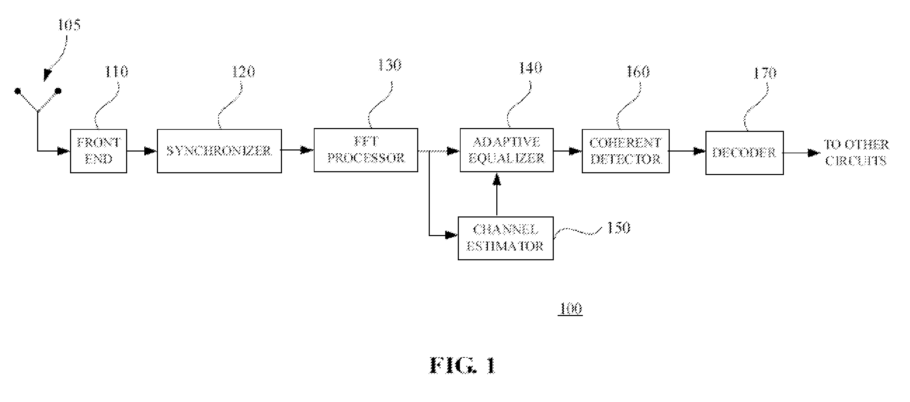

Turning now to the drawings and referring initially to FIG. 1, a block diagram of an OFDM receiver 100 according to the present disclosure is shown. OFDM receiver 100 includes antenna 105, front end 110, synchronizer 120, fast fourier transform (FFT) processor 130, adaptive equalizer 140, channel estimator 150, coherent detector 160, and decoder 170. In general, OFDM receiver 100 is configured to receive OFDM transmissions and recover the baseband data from the transmissions. The received transmissions may conform to the DVB-T or DVB-H digital television standards or they may conform to any other suitable protocols or standard formats. It should be noted that OFDM receiver 100 may be embodied in hardware, software, or any suitable combination thereof. Additionally, OFDM receiver 100 may be integrated into other hardware and/or software. For example, OFDM receiver 100 may be part of an integrated television signal receiver and display device, a television receiver settop box, or a broadcast signal enabled personal computer. Further, it should be readily appreciated that various components of OFDM receiver 100 may suitably be interconnected by various control inputs and outputs, not shown, for the communication of various control settings. For example, FFT processor 130 may include a suitable input for receiving window synchronization settings.

A suitable transmitted signal is received by antenna 105 and input to front end 110. Front end 110 is configured to receive transmitted OFDM signals, select the desired OFDM signal, and generate time-domain samples or data. To this end, front end 110 may include input signal conditioning elements such as tuning circuits, mixers, amplifiers, oscillators and filters. Front end 110 also includes an analog-to-digital converter (ADC).

The output of front end 110 is connected to synchronizer 12 0. Synchronizer 120 contains circuits for adjusting the relative signal position of the sampled time domain input signal from the front end for proper processing by FFT processor 130. Synchronizer 120 may include, for example, a windowing circuit that multiplies the sampled time domain data by a window function such as a Hamming window, Hanning window, or the like. Synchronizer 120 may also include part, or all, of the signal processing for performing carrier signal synchronization or symbol timing synchronization.

The output of synchronizer 120 is connected to FFT processor 130. FFT processor 130 is configured generate frequency-domain representations or data from the time-domain samples by performing FFT operations on blocks of the time-domain data. The size and complexity of the transform operation and the resulting size and complexity of the FFT processor may be primarily dependent upon the size of the fourier transform matrix used. For instance, IEEE 802.11 systems use a 64 point FFT, whereas DVB-T or DVB-H systems use either a 2,048 (2K) or 8,096 (8K) point FFT. It is important to note that the FFT is a computationally efficient form of the discrete Fourier transform (DFT), and as such, the DFT may be implemented in place of the FFT. Additionally, alternate forms of transformation processes may exist and may be used in place of the FFT.

One output of FFT processor 130 is connected to adaptive equalizer 140. In general, adaptive equalizer 140 is configured to reduce the multi-path distortion effects of the transmission channel through which the OFDM signals have been transmitted. Adaptive equalizer 140 may adjust or change the amplitude or phase information associated with each or all of the sub-carriers in the OFDM signal. Adaptive equalizer 140 adjusts the amplitude or phase information based on information from computations performed on the incoming desired signal within adaptive equalizer and also based on inputs from other circuits such as channel estimator 150 described below.

A second output of FFT processor 130 is connected to channel estimator 150. Channel estimator 150 uses characteristics of the signal output from FFT processor 130 to determine, as best as possible, the effect of the transmission channel on the incoming OFDM signal. For example, channel estimator 150 may extract certain sub-carriers from the signal to determine a coarse estimate of the effect of the transmission channel on the incoming OFDM signal. Channel estimator 150 may further include a system for determining the effect of the transmission channel on the remaining sub-carriers from the coarse estimate. Further details on the channel estimation circuit will be described below.

The output of adaptive equalizer 140 is connected to coherent detector 160. Coherent detector 160 determines symbol values at certain intervals of time for the incoming OFDM signal. It is important to note that adaptive equalizer 140 and coherent detector 160 may operate iteratively in order to improve the accuracy of the detected output symbols and, as such, may be included together in one circuit.

The output of coherent detector 160 is connected to decoder 170. Decoder 170 recovers the transmitted data bits from the sequences of frequency-domain symbols that are delivered to it from coherent detector 160. Data recovery from the symbols is performed by decoding the symbols to obtain a stream of data bits which should ideally match the stream of data bits that were provided as the input for the transmitted OFDM signal. This decoding process may include circuits for processing error correction information added to the data such as data deinterleaving, Viterbi decoding and/or Reed-Solomon decoding. Additionally, decoder 170 may include circuits for recovering data from block and/or convolutionally encoded sub-symbols.

The output of decoder 170 is typically connected to further downstream signal processing, not shown, for converting the data stream into a signal suitable for display or other related use. For example, the downstream signal processing may include circuits used to generate audio and video signals for display on a television.

In operation of OFDM receiver 100, front end 110 receives OFDM signals and generates time-domain data that processed or synchronized by synchronizer 120. The time domain samples are provided to FFT processor 130. FFT processor 130 generates frequency-domain representative data from the time-domain data by performing FFT operations on blocks of the time-domain data and provides the frequency domain representative data for channel estimation and detection. Channel estimation is performed in channel estimator 150 and estimation information, along with the frequency domain representative data is provided to adaptive equalizer 140 for removal or reduction of transmission channel effects, such as multipath and doppler distortion, on the signal. The equalized data is detected in coherent detector 160 to determine values for received data symbols. The data symbols are further decoded into a data stream in decoder 170 and provided for further downstream signal processing.

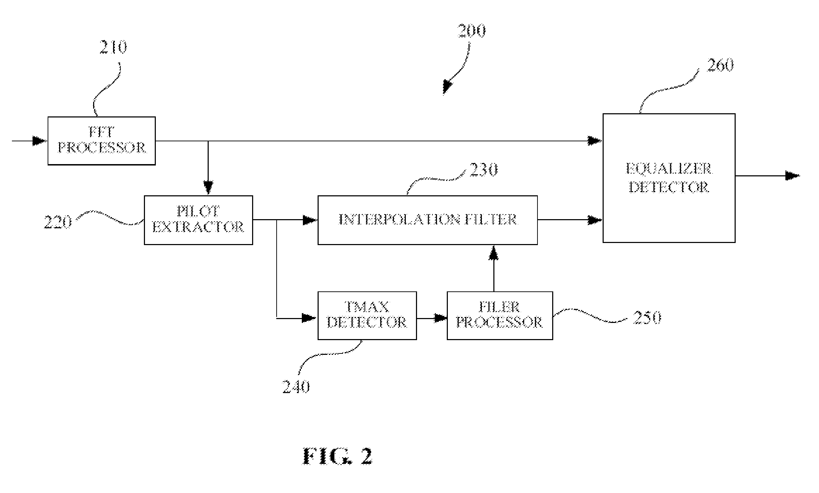

Turning now to FIG. 2, a block diagram of a channel estimation circuit 200 according to certain aspects of the present disclosure is shown. The channel estimation circuit 200 includes an FFT processor 210, pilot extractor 220, interpolator filter 230, maximum time (tmax) detector 240, filter processor 250, and equalizer/detector 260. FFT processor 210 is similar in function to FFT processor 130 described earlier and will not be further described here. Also, equalizer/detector 260 is similar in function to the combined blocks of adaptive equalizer 140 and coherent detector 160 described earlier and also will not be further described here.

One output from FFT processor 210 is provided to equalizer/detector 260 as described earlier. A second output from FFT processor 210 is used for channel estimation and is provided to pilot extractor 220. Pilot extractor 220 is configured to extract pilot sub-carriers from the incoming OFDM signal. In addition, pilot extractor 220 may extract the data, known as training symbols, from extracted sub-carriers. A training symbol contains data values for certain sub-carriers that are transmitted as predetermined values within the OFDM signal.

Pilot extractor 220 uses the extracted symbols in order to determine the effect of passing the OFDM transmission through the transmission channel on the predetermined or expected symbol values for the pilot sub-carriers. For example, pilot extractor 220 may compare the received value for one or more values transmitted on the pilot sub-carriers to the known or expected values. These known or expected values may be determined based on previously transmitted values or may be values for the pilot sub-carriers stored in a memory, not shown. In a preferred embodiment, pilot extractor 220 extracts the received values from the pilot sub-carriers and also determines information related to the expected or known values for the received pilot sub-carriers. Alternately, pilot extractor may retrieve information for the received pilot sub-carriers from memory. Pilot extractor 220 then computes a ratio of the received values for the pilot sub-carriers to the expected values for the pilot sub-carriers. The computed ratio represents a frequency-domain channel response for the frequencies associated with the pilot sub-carriers. It should be readily be appreciated that the present embodiment may be used to sequentially process data for a plurality of sub-carriers, or various components of the present embodiment may be suitably replicated and coupled to parallel process data for a plurality of sub-carriers.

One output from the pilot extractor 220 is provided to interpolation filter 230. This output signal from pilot extractor 220 may be a discrete representation of the amplitude and phase of the response or effect of the transmission channel on the pilot sub-carriers. Interpolation filter 230 is used to interpolate the discrete values provided from pilot extractor 220 and determine the estimation value for all the other sub-carriers in the desired OFDM signal. Interpolation filter 230 may be implemented as a digital filter in the frequency domain and oriented as a linear arrangement of weighted coefficients multiplied with a delayed version of the incoming signals, with each multiplied value summed together to produce the output. Alternate discrete or digital filter implementations may also be employed. Interpolation filter 230 is a programmable filter and parameters or characteristics of the filter may be input from external circuits or, in some cases, internally computed. In a preferred embodiment, interpolation filter 230 implements linear interpolation to interpolate the effect of the transmission for all of the sub-carriers based on inputs determined from the pilot sub-carriers. However, other interpolation techniques including, second-order interpolation, spline cubic interpolation and low-pass filter interpolation may be used as is well known to those skilled in the art.

A second output from pilot extractor 220 is provided to tmax detector 240. Tmax detector 240 processes the amplitude and phase information determined for effect of the channel response based on the extracted pilot sub-carriers in order to determine a channel time delay characteristic present for the transmission channel. In a preferred embodiment, tmax detector 240 performs an inverse FFT (IFFT) computation to convert the frequency-domain channel response for the pilot subcarriers determined in pilot extractor 220 back into time-domain channel response. The IFFT time domain channel response contains time delay channel information for the pilot subcarriers including multi-path and doppler effects. The maximum delay path may be determined by finding the maximum index point in the time domain channel response, or maximum index point exceeding a pre-defined threshold. Alternately tmax detector 240 may use combinations of index values in the IFFT time domain channel response and to compute or compare the amplitude and phase information for these various combinations to determine the channel time delay characteristic.

The output of tmax detector 240 connects to filter processor 250 . Filter processor 250, based on the channel time delay characteristic information provided by tmax detector 240, determines and selects a set of operating parameters for interpolation filter 230. The operating parameters that may be determined and selected for interpolation filter 230 may include the quantity of filter taps used, the time delay associated with one or more of the filter taps, and the values of the coefficients used with the filter taps. Filter processor 250 may run a software algorithm to determine the proper or best filter parameters for use based on the channel time delay characteristic information from tmax detector 240. In a preferred embodiment, filter processor 250 determines if the currently used set of coefficients or a new set of coefficients are the most optimal for use by interpolation filter 230 based on a newly received maximum channel delay. The new maximum channel delay is checked to determine whether the new channel is the same or similar to the currently used maximum channel delay. As an alternative, the new maximum channel delay may be checked to determine whether the new delay falls within in a delay range or delay group that corresponds to operating parameters used currently with interpolation filter 230.

If the new maximum channel delay does not match to the currently used delay value, then an interrupt request in filter processor 250 is used to trigger the computation of an appropriate new set of filter coefficients and associated filter characteristic information. Alternatively, the coefficients and associated filter characteristic information may be retrieved from a memory, having been computed or determined as a result of a prior process or loaded and stored in the memory during initial manufacturing steps. Filter characteristic information may include, but is not limited to, the passband nature, the number of taps, the time distance between taps, and the coefficient values. The filter coefficients, along with the associated filter characteristic information, are provided to interpolation filter 230 as programming information in order to change the characteristics and operation of the filter. Information about the channel time delay characteristic and/or the filter coefficients and filter characteristic information currently used may be stored in a set of registers in a memory for later comparison.

Otherwise, if the new maximum channel delay does match to the currently used delay value, no change to current setting may be necessary. Filter processor 250 may further attend to any other tasks, such as computation of additional filter coefficients, and wait for the receipt of subsequent channel delay information from tmax detector 220.

The output signal of interpolation filter 230 is a representative transmission channel estimation signal for the entire incoming desired OFDM signal across all sub-carriers. The channel estimation results, combined with the incoming transform OFDM signal from FFT processor 210, are used in the equalization and coherent detection process in equalizer/detector 260 as described earlier.

In this embodiment, the interpolation filter update of coefficients and other characteristics is implemented by an algorithm operating in filter processor 250, while other blocks involved in channel estimation are implemented as hardware circuits. An advantage to implementing the algorithm for controlling interpolator filter 230 as software in filter processor 250 includes the ability to download new and improved algorithms into filter processor 250. The new algorithms may be downloaded while the product is in actual customer use and then used in future operation, making the OFDM receiver product more adaptable to any possible future signal environments. It also should be recognized that it is possible to include some hardware functions as additional portions of the algorithm in filter processor 250 and to implement portions of the algorithm within circuitry of hardware blocks similar to those shown or in additional hardware circuits not shown.

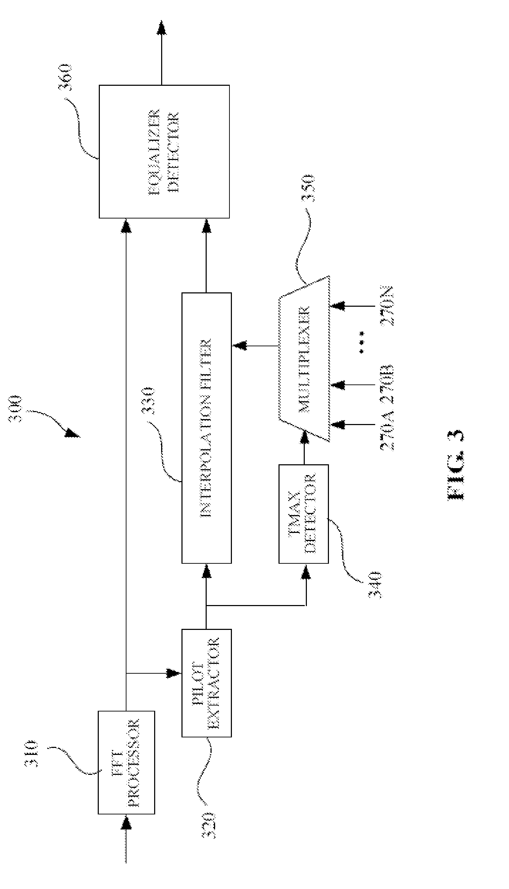

Turning now to FIG. 3, a block diagram of an alternative channel estimation circuit 300 according to certain aspects of the present invention is shown. The channel estimator circuit 300 includes an FFT processor 310, pilot extractor 320, interpolator filter 330, tmax detector 340, multiplexer 350, and equalizer/detector 360. FFT processor 310, pilot extractor 320, interpolator filter 330, tmax detector 340, and equalizer/detector 360 are similar in function to corresponding blocks in FIG. 2 and only additional features will be further described here.

As described earlier, tmax detector 340 receives amplitude and phase information from pilot extractor 320 and processes th is amplitude and phase information to determine a channel time delay characteristic. The output of tmax detector 340 is connected to multiplexer 350. Multiplexer 350 compares the channel time delay value provided by tmax detector 340 to a set of values or ranges for channel time delay to determine which channel delay time group the channel time delay value provided by tmax detector 340 matches or falls within.

Channel delay time groups may be pre-defined for different channel time delays or delay ranges. Each channel delay time group is associated or linked with a set of filter coefficients whose cut-off frequency and other operating parameters most closely accommodate the channel time delay or delay range. The filter coefficient values, shown as 270a-N, are predetermined values and are selectable as an input to multiplexer 350. The coefficient values 270a-N may reside in memory within multiplexer 350 or may reside in a memory, not shown, external to multiplexer 350. It is important to note that many coefficient values 270a-N may be present and available as inputs to multiplexer 350. Some values may be used only in certain channel delay time groups and some values may be used for more than one filter tap in the same channel delay time group. For example, multiplexer 350 may include a predetermined number of groups, such as five (5) groups, to cover a range of possible channel time delay values. It is important to note that the larger the number of groups, the better the set of filter coefficients may match the actual channel environment. However, the larger number of groups increases the complexity of multiplexer 350 and the memory associated with multiplexer 350.

Multiplexer 350 determines the channel delay group that will be used and selects the number of coefficients and coefficient values for the coefficients based on the selected channel delay group. In a preferred embodiment, multiplexer 350 includes a set of comparators used to compare the received maximum channel time delay value with an upper bound channel time delay value and a lower bound channel time delay value for each of the possible delay groups. Selection of a channel delay group is made based on the results of the comparators and the appropriate filter information and coefficients are chosen as a result.

Multiplexer 350 provides the filter information and coefficients to interpolation filter 330. Each time a value is provided from tmax detector 340 to multiplexer 350, multiplexer 350 may provide new and updated coefficients to interpolation filter 330. Multiplexer 350 may also include circuitry for calculating an effective maximum channel time delay based on successive channel time delay values. For example, multiplexer 350 may average two or more successive channel time delay values prior to selecting a channel delay group. A main advantage of the embodiment described in FIG. 3 over the embodiment described in FIG. 2 involves the relative update rate of the interpolation. The coefficient sets are fixed in hardware in FIG. 3 and, as a result, the update rate for the coefficients of the interpolation filter is primarily determined by hardware and not a function of processing capability.

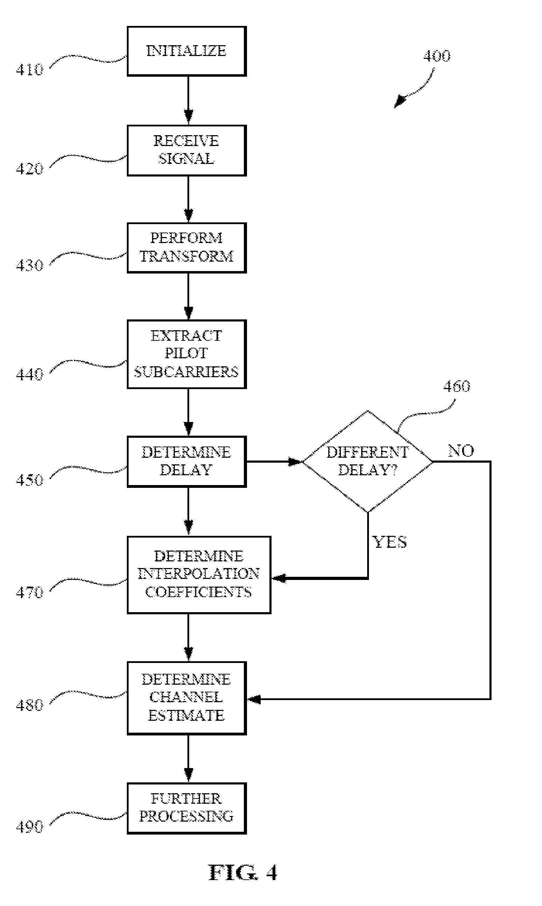

Turning now to FIG. 4, a flow chart illustrating a process 400 for channel estimation in a receiver, such as an OFDM receiver, according to certain aspects of the present disclosure is shown. For purposes of example and explanation, the steps of process 400 will be described primarily with reference to channel estimation circuit 200 of FIG. 2. It should be noted that the steps of process 400 may also be undertaken by the channel estimate circuit shown in FIG. 3. The steps of process 400 are exemplary only, and are not intended to limit the present disclosure in any manner.

At step 410, initialization of circuitry related to the channel estimation process and, if necessary, other portions of the OFDM receiver 100 , is performed. The initialization may include filter processor 250 configuring the channel estimation unit with a default set of coefficients for use with interpolator filter 230. For example, the default set of coefficients may be the set of coefficients correspond ing to the shortest path group of channel delays. The default coefficient set may also be a set of coefficients implementing the smallest filter (i.e. the fewest quantity of filter taps). A register or memory location may be used to identify the current group of channel delays or current set of coefficients. This current register may also be set to the corresponding default group value at the same time.

At step 420 an OFDM signal is received and the desired OFDM set of subcarriers is selected using circuitry such as front end 110 shown in FIG. 1. Step 420 may also include additional processing such as windowing or synchronization as is necessary in order to further demodulate the OFDM signal. Next at step 430, the received OFDM signal is transformed in a manner required by the transmission format for the received OFDM signal. For example, a transform such as an FFT may be implemented in an FFT processor 210.

At step 440, after the received signal is transformed, the pilot sub-carriers are extracted from the transformed signal. The subsequent transmission channel response information is obtained from these pilot sub-carriers in a circuit such as pilot extractor 220. Information from the channel response characterization of the pilot sub-carriers is used for interpolation of the channel response for the entire desired OFDM set of sub-carriers. Next, at step 450, a channel time delay character istic is determined from the transmission channel response information for the pilot sub-carriers. For example, a maximum channel delay value may be determined by a circuit such as tmax detector 240. It is important to note that values other than the maximum channel delay may be determined and used as a suitable estimate for the maximum delay. Alternatively, values other than the maximum channel delay may be used as a different suitable delay value input for adaptation of the channel estimation process.

Next at step 460, a comparison is made between settings for the currently used channel time delay and the newly determined information for the channel delay. The comparison may be carried out in software or in hardware. For example, the comparison may be performed as part of the operation of filter processor 250, or alternatively carried out in multiplexer 350 in FIG. 3.

If at step 460, the comparison determines that the current time delay settings do not match the newly determined time delay information, then at step 470, a new set of filter coefficients is determined and provided to interpolator filter 230. For example, filter processor 250 determines the new set of coefficients and other information necessary for altering the characteristics of interpolator filter 230.

Then at step 480, the channel estimate for the desired incoming OFDM signal including all of the sub-carriers is determined using the new set of filter coefficients. The new channel estimate is based on the channel estimates for the pilot sub-carriers determined in a pilot extracting and processing circuit such as pilot extractor 220 and passed through a filter such as interpolation filter 230.

If at step 460, the comparison determines that the current channel time delay matches or is otherwise similar to the newly determined channel time delay, then at step 480, the channel estimate is determined as described above using the current set of filter coefficients. At step 490, further processing of the incoming desired OFDM signal is performed, such as equalization, symbol and bit detection, and decoding.

As an alternative embodiment, steps 460 and 470 may be combined. A new set of filter coefficients may first be determined or computed based on the newly determined channel time delay. Then, a comparison may be made between the newly determined filter coefficients and the currently used filter coefficients. If the newly determined filter coefficients do not match the currently filter coefficients, then the currently used filter coefficients are replaced by the newly determined filter coefficients. Otherwise, the currently used filter coefficients would remain in use.

It is important to note that certain steps described in process 400 may be performed periodically. For instance, the steps after step 410 may be performed each time a new desired OFDM signal or broadcast channel is selected. Additionally, steps 450, 460, 470, and 480 may also be performed on a continuous basis. For instance, steps 450, 460, 470, and 480 may form a continuous loop, called a detection-interrupt-update loop. A loop such as the detection-interrupt-update loop may be useful in signal environments in which the transmission channel environment varies significantly and/or frequently with time.

The embodiments describe techniques and circuits for improving channel estimation and, in particular, improving channel estimation in the presence of a time varying and unknown channel delay characteristic. Certain advantages of these embodiments associated with the described channel estimation techniques include interpolation filter coefficients that are adaptively updated according the channel environment. The updates may include both the number of coefficients or size of the filter used as well as the value for the coefficients chosen. The adaptive approach permits greater reduction in noise present in the signal and at the same time prevents long channel delay paths from being inadvertently filtered out. As a result, overall receiver bit error rate performance will be improved compared to solutions using fixed filter coefficients and a fixed filter size.

While the above described embodiments may be susceptible to various modifications and alternative forms, specific embodiments have been shown by way of example in the drawings and have been described in detail herein. However, it should be understood that the disclosure is not intended to be limited to the particular forms disclosed. Rather, the disclosure is to cover all modifications, equivalents and alternatives falling within the scope of the disclosure as defined by the following appended claims.

## Claims

1. A method (400) for channel response estimation in an Orthogonal Frequency Division Multiplexing (OFDM) receiver, the method comprising the steps of:
receiving (420) an OFDM signal containing pilot sub-carriers;
calculating (440) a transmission channel response based on the pilot sub-carriers;
deriving (450) a time delay characteristic based on the transmission channel response; and
selecting (470) interpolation filter coefficients in response to the derived time delay characteristic.

2. The method (400) of claim 1, wherein the time delay characteristic is representative of a maximum delay time of the transmission channel.

3. The method (400) of claim 1, wherein the step of selecting (470) interpolation filter coefficients further includes the step of determining new filter coefficients in response to a comparison of the derived time delay characteristic and a currently used time delay characteristic.

4. The method (400) of claim 1, wherein the step of selecting (470) interpolation filter coefficients includes selecting a quantity of filter taps.

5. The method (400) of claim 1, wherein the step of selecting (470) interpolation filter coefficients includes comparing said determined time delay characteristic to a set of stored time delay characteristics.

6. The method (400) of claim 1, wherein the step of deriving (450) the time delay characteristic further includes comparing a received value for the pilot sub-carriers to a stored value for the pilot sub-carriers.

7. The method (400) of claim 1, wherein the step of deriving (450) the time delay characteristic further includes comparing a received value for the pilot sub-carriers to a previously calculated value for the pilot sub-carriers.

8. The method (400) of claim 1, further including the step of interpolating (480) a channel response for the OFDM signal using the selected filter coefficients and the transmission channel response.

9. The method (400) of claim 1, further comprising the steps of:
receiving a software algorithm; and
updating the interpolation filter coefficients based on the received software algorithm.

10. An apparatus (200) for receiving an Orthogonal Frequency Division Multiplexing (OFDM) signal, including sub-carriers containing reference data, transmitted across a transmission channel, comprising:
an extraction block (220) coupled to an input of the apparatus for separating the sub-carriers containing reference data from the OFDM signal and for determining the effect of the transmission channel on the sub-carriers containing reference data;
an interpolation circuit (230) coupled to the extraction block (230) for outputting an estimate of the effect of the tra nsmission channel on the OFDM signal; and
a controller (250) coupled to the extraction block (220) and the interpolation circuit (230) for altering the characteristics of the interpolation circuit (230) based on the effect of the transmission channel on the sub-carriers containing reference data.

11. The apparatus (200) of claim 10, wherein the interpolation circuit (230) is a filter, including at least one filter tap, for implementing linear interpolation.

12. The apparatus (200) of claim 11, wherein the controller (250) alters the interpolation circuit (230) by changing a characteristic of the filter.

13. The apparatus of claim 10 further comprising a detector (240) coupled to the controller (250) and to the extractor block (220) for determining a time delay characteristic based on determining the effect of the transmission channel on the sub-carriers containing reference data.

14. The apparatus of claim 13 wherein the time delay characteristic is representative of a maximum time delay.

15. An apparatus (200) for channel response estimation in an Orthogonal Frequency Division Multiplexing (OFDM) receiver, comprising:
means for extracting (220) a set of sub-carriers from the OFDM signal;
means for calculating (220) a transmission channel response based on the extracted set of sub-carriers;
means for deriving (240) a time delay characteristic based on the calculated transmission channel response; and
means for selecting (250) an interpolation filter characteristic in response to determining the time delay characteristic.

16. The apparatus (200) of claim 15, wherein the means for selecting (250) includes a means for selecting a quantity of filter taps for an interpolation filter.

17. The apparatus (200) of claim 15, wherein the means for selecting (250) includes the means for determining new filter coefficients for said interpolation filter in response to a comparison of said determined time delay and a currently used time delay value.

18. The apparatus (200) of claim 15, wherein the apparatus further includes:
means for receiving a software algorithm; and
means for updating the interpolation filter characteristic based on the received software algorithm.

19. The apparatus (200) of claim 15, wherein the apparatus further includes a means for interpolating a channel response for the OFDM signal from a channel response determined for the extracted sub-carriers.

20. The apparatus (200) of claim 15 wherein the time delay characteristic is representative a maximum channel time delay.
